# EUROPÄISCHE PATENTSCHRIFT

(11) **EP 0 433 346 B1**
(45) Veröffentlichungstag und Bekanntmachung des Hinweises auf die Patenterteilung: **27.01.1993**
(21) Anmeldenummer: 89910078.8
(22) Anmeldetag: 06.09.1989
(51) Int. Cl.: B60V 1/14

(54) **LUFTKISSENFAHRZEUG**
AIR-CUSHION VEHICLE
VEHICULE SUR COUSSIN D'AIR

(30) Priorität: 09.09.1988 DE 3830689
(43) Veröffentlichungstag der Anmeldung: 26.06.1991
(73) Patentinhaber: KÖNIG MASCHINENBAU GmbH, D-63654 Büdingen (DE)
(72) Erfinder: STIEGLER, Hartmut, D-6348 Herborn (DE)
(74) Vertreter: Weber, Otto Ernst, Dipl.-Phys.
(86) Internationale Anmeldenummer: EP8901037
(87) Internationale Veröffentlichungsnummer: WO9002677

(56) Entgegenhaltungen:
- FR-A- 2 305 344
- GB-A- 2 068 310
- US-A- 4 421 489

## Beschreibung

Die Erfindung betrifft ein Luftkissenfahrzeug mit einer Hub- und Vortriebsanlage, bestehend aus einem Axialgebläse dessen Laufrad vor einem als Schubdüse ausgebildeten Kanal angeordnet ist.

Bei Luftkissenfahrzeugen wird zur Verminderung des Fortbewegungswiderstandes ein statisches Luftkissen eingesetzt, welches durch Aufbau eines Druckpolsters mittels eines Gebläses eine höhere Antriebskraft als das Gerätegewicht aufweist.,Die Fortbewegung eines Luftkissenfahrzeuges kommt durch den Schub eines ausgestoßenen Luftstromes zustande. Der besondere Vorteil derartiger Fahrzeuge besteht darin,daß z. B. Boote als amphibische Fahrzeuge eingesetzt werden können.

Die Druckluft zum Betrieb eines solchen Fahrzeuges wird den Hub- und Vortriebsanlagen zugeführt und die Steuerung der Schubeinrichtung erfolgt über verstellbare Klappen und Schaufeln.

Es sind verschiedene Steuerungsvorrichtungen bekannt, mit denen eine wirkungsvolle Lenkung und gleichzeitig eine wirkungsvolle Steuerung der Vor- bzw. Rückbewegung sowie eines Schwebezustandes des Fahrzeuges erreichet werden soll.

Die DE-OS 3121 886 beschreibt eine Auf- und Vortriebsanlage eines Luftkissenfahrzeuges, bei welcher das Axialgebläse zwei Laufräder aufweist. Das eine Laufrad erzeugt mit seinem peripheren Teil die Druckluft für das Luftkissen, während das andere Laufrad die Luftströmung für die Schubdüse erzeugt. In den Seitenwänden der Schubdüse sind feststehende Schaufeln zur Luftstrahlungssteuerung angebracht und am Ausgang verstellbare Ruder zur Steuerung der Bewegungsrichtung des Luftkissenfahrzeuges angeordnet.

Mit den Rudern kann die Wirkungsrichtung des Schubstrahles und damit die Bewegungsrichtung des Luftkissenfahrzeuges geändert werden.
Zum Rückwärtsmanövrieren wird durch Verstellung der Ruder der Luftstrahl aus der Schubdüse über die seitlichen Schaufeln umgelenkt.
Aus der DE-OS 3121 885 ist zu entnehmen, daß die Ruder zum Absperren der Schubdüse sich unter einem stumpfen Winkel aneinanderlegen und so der Luftstrom zur Schubumkehr zu den seitlichen Schaufeln gelenkt wird.

Weil die seitlichen Schaufeln ein feststehendes Gitter bilden, bleiben diese auch bei Vorschubbetrieb nicht ohne Einfluß auf die Luftströmung, was zu Energieverlusten führt.

Zur optimalen Ausnutzung der vom Axialgebläse erzeugten Luftströmung sollte der jeweilige Strömungskanal bei jeder Steuerungslage'die aerodynamisch günstigste Ausbildung haben.

Der Erfindung liegt die Aufgabe zugrunde, die Steuerschaufel am Schubdüsenende und die seitlichen Umkehrschaufeln so auszubilden und zusammen wirken zu lassen, daß mit einfachen Mitteln eine wirkungsvolle Steuerung des Luftkissenfahrzeuges gewährleistet ist.

Zur Lösung dieser Aufgabe werden die im kennzeichnenden Teil des Patentanspruches angegebenen Merkmale vorgeschlagen.

Sowohl in Vorschubstellung als auch in Umkehrschubstellung bilden die Steuerschaufeln bzw. die Umkehrschaufeln einen Teil des jeweiligen Strömungskanales, sodaß unwirksame Strömungsverluste auf ein Minimum begrenzt sind.

In der Zeichnung ist die Erfindung an einem Ausführungsbeispiel dargestellt.
Es zeigen:

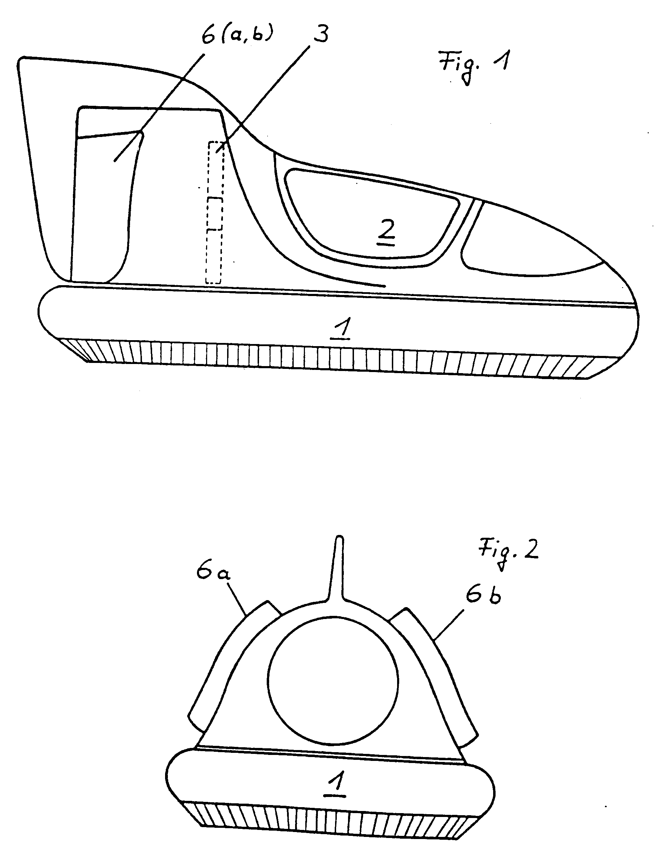

Fig.1 ein Luftkissenboot in Seitenansicht
Fig.2 die Ansicht von hinten
Fig. 3+4 die Stellung der Steuerschaufeln und Umkehrschaufeln im Vorschubbetrieb bzw. bei Schubumkehr
Fig. 5+6 die Stellung der Steuerschaufeln und Umkehrschaufeln beim Wendemanöver links bzw. rechts

Oberhalb des ein Luftkissen bildenden Stauraumes 1 befindet sich an der Frontseite des Luftkissenboote: der Führerstand 2 und dahinter die Hub- und Vortriebsanlage.
Die Hub- und Vortriebsanlage besteht im wesentlichen aus dem Laufrad 3 eines Axialgebläses, dessen peripherer Teil vor einem mit dem Stauraum 1 in Verbindung stehenden Kanal 4 liegt, während der innere Teil eine Luftströmung zu der nachgeordneten Schubdüse erzeugt. Über den Kanal 4 wird das erforderliche Luftkissen im Stauraum 1 aufrecht erhalten.

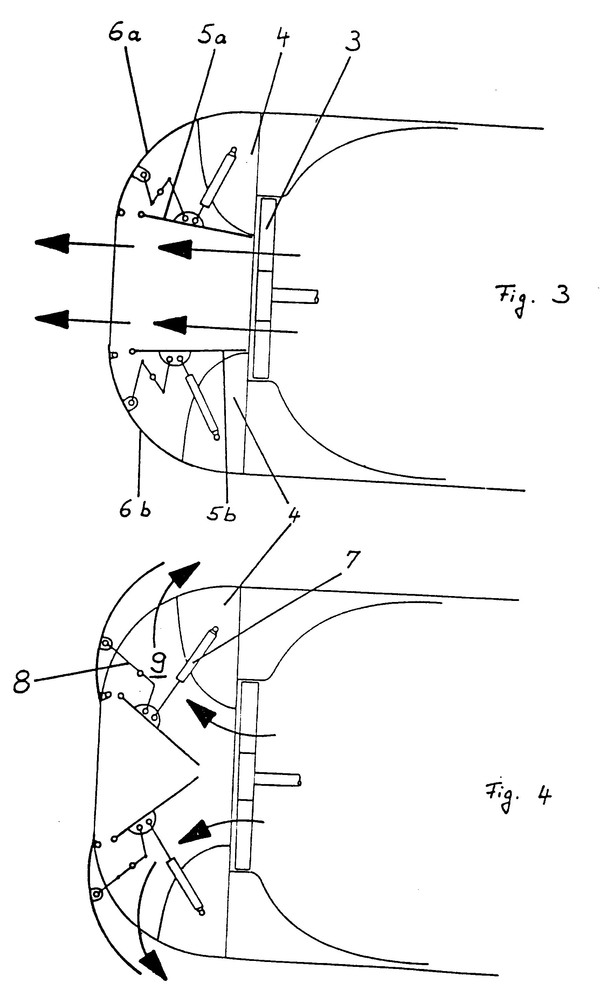

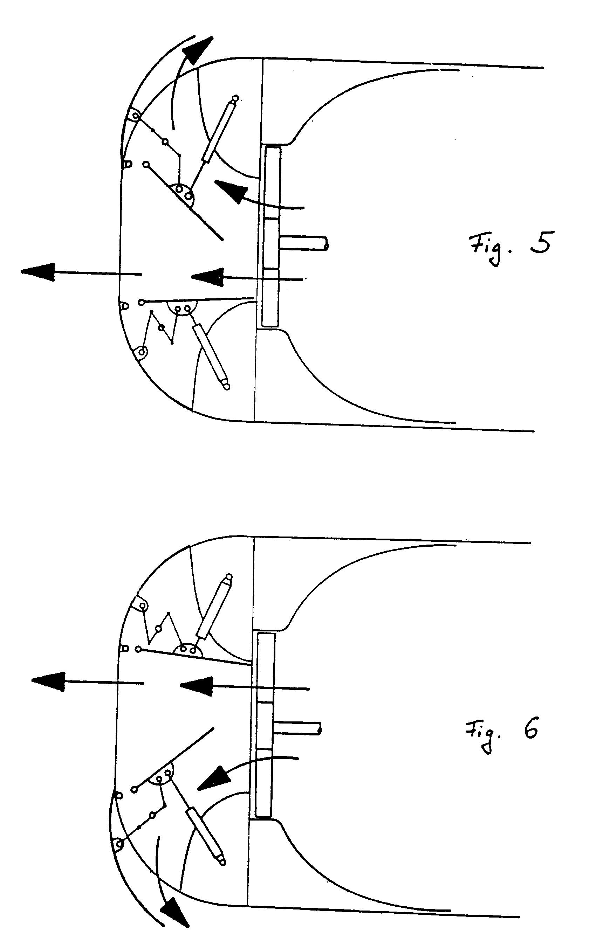

Wie Fig. 3 zeigt,wird durch die beiden Steuerschaufeln 5a und 5b in Vorschubstellung eine Schubdüse gebildet. Der vom Laufrad 3 erzeugte Luftstrom strömt nach hinten weg und gibt dem Fahrzeug den maximalen Vorschub in Fahrtrichtung.
Die einen Teil der Fahrzeugwand bildenden Umkehrschaufeln 6a und 6b sind dabei in eingefahrener Stellung.
Soll die Schubrichtung umgekehrt (Rückwärtsfahrt) oder die Fahrt abgebremst werden, dann werden die Steuerschaufeln und die Umkehrschaufeln in die in Fig. 4 gezeigte Stellung gefahren. Die Verstelleinrichtung mit Antriebskolben 7 und Gestänge 8 ist nur schematisch angedeutet.

Die Druckluft strömt nunmehr über die dachförmig aneinandergefahrenen Steuerschaufeln 5a und 5b in den so gebildeten Umkehrkanal 9 und die entsprechend gekrümmten ausgefahrenen Umkehrschaufeln 6 a und 6b unter Richtungsumkehr seitlich ab und bewirkt somit einen umgekehrten Schub.

Durch das Ausfahren der Steuerschaufeln und deren Überstand über die Karosseriekontur hinaus, wirkt die von außen auf den überstehenden Teil aufprallende Luftströmung zusätzlich als Brems- bzw. Steuerkraft.

Die Steuerschaufeln 5 a und 5b dienen auch zum Ausführen von Wendemanövern, wie die Fig. 5 und 6 verständlich machen. Je nach dem welches der Klappenpaare verstellt wird und in welchem Ausmaß die Verstellung vorgenommen wird, erfolgt eine Ablenkung eines Teiles des Luftstromes nach der Seite.
Durch das dabei erzeugte Moment wird das Fahrzeug gewendet.

Mithilfe der Betätigung von zwei einfachen Klappenpaaren läßt sich das Fahrzeug wirkungsvoll steuern und es lassen sich alle gewünschten Manöver leicht ausführen.

## Patentansprüche

1. Luftkissenfahrzeug mit einer Hub- und Vortriebsanlage, bestehend aus einem Axialgebläse vor einem als Schubdüse ausgebildeten Kanal, welcher mindestens zwei zueinander parallel verlaufende Steuerschaufeln sowie seitliche Umkehrschaufeln aufweist, wobei die Steuerschaufeln zur Schubumkehr den Ausgangsquerschnitt absperren, indem sie sich unter einem Winkel aneinanderlegen, dessen Spitze dem Axialgebläse zugewandt ist und dadurch den vom Axialgebläse erzeugten Luftstrom zu den seitlichen Umkehrschaufeln lenken, dadurch gekennzeichnet, daß
a) in Vorschubstellung die Steuerschaufeln (5a; 5b) Begrenzungsteil der Schubdüse sind, während die Umkehrschaufeln (6a; 6b) einen Teil der Fahrzeugwand bilden und
b) in Schubumkehrstellung die Umkehrschaufeln nach außen aufgeklappt sind und zusammen mit den dem Austrittsquerschnitt absperrenden Steuerschaufeln einen Schubumkehrkanal (9) bilden.

2. Luftkissenfahrzeug nach Anspruch 1, dadurch gekennzeichnet, daß die Steuerschaufeln (5a; 5b) mit den zugehörigen Umkehrschaufeln (6a; 6b) über ein Getriebe gekoppelt sind.

3. Luftkissenfahrzeug nach Anspruch 1 und/oder 2, dadurch gekennzeichnet, daß die axialsymmetrich zur Fahrzeugachse angeordneten linken bzw. rechten Schaufelpaare (5a-6a; 5b-6b) unabhängig voneinander betätigbar sind.

4. Luftkissenfahrzeug nach einem oder mehreren der Ansprüche 1 bis 3, dadurch gekennzeichnet, daß die Schwenkachsen der Steuerschaufeln (5a; 5b) und Umkehrschaufeln (6a; 6b) am Ende der Schubdüse angeordnet sind.

5. Luftkissenfahrzeug nach einem oder mehreren der Ansprüche 1 bis 4, dadurch gekennzeichnet, daß das Lüfterrad (3) des Axialgebläses sowohl den Querschnitt der Schubdüse als auch einen um die Schubdüse liegenden mit dem Luftkissen-Stauraum in Verbindung stehenden Ringkanal (4)mit Druckluft beaufschlagen.

6. Luftkissenfahrzeug nach einem oder mehreren der Ansprüche 1 bis 5, dadurch gekennzeichnet, daß die Steuerschaufeln (5a; 5b) in ausgefahrener Stellung über die seitliche Kontur der Fahrzeugkarosserie hinausragen.

## Claims

1. Air-cushion vehicle with a lifting and propulsion plant, consisting of an axial blowing engine in front of a channel made in form of a propelling nozzle and having at least two control blades parallel to each other as well as lateral reversing blades, the control blades closing off the cross-section of the outlet to reverse the thrust by pushing against each other at an angle the point of which is towards the axial blowing engine and thereby guide the air flow produced by the axial blowing engine to the lateral reversing blades,
**characterized** in that
(a) the control blades (5a; 5b) are delimiting part of the propelling nozzle in propulsion position while the reversing blades (6a; 6b) are a part of the vehicle wall and
(b) the reversing blades are opened out in the thrust reversing position and, together with the control blades which close off the outlet cross-section, constitute a thrust reversing channel (9).

2. Air-cushion vehicle according to claim 1,
**characterized** in that
the control blades (5a;5b) are coupled via a gearing to the corresponding reversing blades (6a;6b).

3. Air-cushion vehicle according to claim 1 and/or 2,
**characterized** in that
the left and right blade pairs (5a-6a; 5b-6b) which are axially symmetrical with respect to the vehicle axis can be actuated independently of each other.

4. Air-cushion vehicle according to one or several of the claims 1 to 3,
**characterized** in that
the swivel axes of the control blades (5a;5b) and reversing blades (6a;6b) are located at the end of the propelling nozzle.

5. Air-cushion vehicle according to one or several of the claims 1 to 4,
**characterized** in that
the impeller (3) of the axial blowing engine subjects the cross-section of the propelling nozzle as well as a ring channel (4) connected to the air-cushion/banking chamber and surrounding the thrust nozzle with compressed air.

6. Air-cushion vehicle according to one or several of the claims 1 to 5,
**characterized** in that
in their extended position the control blades (5a; 5b) project beyond the lateral contour of the body of the vehicle.

## Revendications

1. Véhicule à coussin d'air avec une installation de sustentation et de propulsion constituée par une soufflante axiale devant un canal revêtant la forme d'une tuyère de poussée, installation qui compte au moins deux palettes de commande s'étendant parallèlement l'une par rapport à l'autre ainsi que des palettes latérales d'inversion, tandis que les palettes de commande ferment la section transversale de sortie pour l'inversion de poussée, du fait qu'elles s'appliquent l'une sur l'autre sous un angle dont la pointe est tournée vers la soufflante axiale et qu'ainsi le courant d'air produit par cette soufflante axiale est dévié vers les palettes latérales d'inversion, véhicule à coussin d'air caractérisé en ce que :
a) dans la position de poussée, les palettes de commande (5a, 5b) sont des parties de limitation de la tuyère de poussée, tandis que les palettes d'inversion (6a, 6b) constituent une partie de la paroi du véhicule,
b) dans la position d'inversion de la poussée, les palettes d'inversion sont basculées vers l'extérieur et forment conjointement avec les palettes de commande fermant la section transversale de sortie, un canal d'inversion de poussée (9).

2. Véhicule à coussin d'air selon la revendication 1, caractérisé en ce que les palettes de commande (5a, 5b) sont couplées avec les palettes d'inversion correspondantes (6a, 6b) par l'intermédiaire d'une transmission.

3. Véhicule à coussin d'air selon la revendication 1 et/ou la revendication 2, caractérisé en ce que les paires de palettes gauches ou droites (5a6a, 5b - 6b) disposées symétriquement par rapport à l'axe du véhicule, sont susceptibles d'être actionnées indépendamment l'une de l'autre.

4. Véhicule à coussin d'air selon une ou plusieurs des revendications 1 à 3, caractérisé en ce que les axes de pivotement des palettes de commande (5a, 5b) et des palettes d'inversion (6a, 6b) sont disposés à l'extrémité de la tuyère de poussée.

5. Véhicule à coussin d'air selon une ou plusieurs des revendications 1 à 4, caractérisé en ce que la roue (3) de la soufflante axiale alimente en air comprimé aussi bien la section transversale de la tuyère de poussée, qu'également un canal annulaire (4) se situant autour de la tuyère de poussée et qui est en communication avec la capacité de retenue du coussin d'air.

6. Véhicule à coussin d'air selon une ou plusieurs des revendications 1 à 5, caractérisé en ce que les palettes d'inversion (6a, 6b) font saillie hors du contour latéral de la carrosserie du véhicule, lorsqu'elles sont déployées.
